# EUROPEAN PATENT SPECIFICATION

(11) **EP 1 553 340 B1**
(45) Date of publication and mention of the grant of the patent: **23.08.2006**
(21) Application number: 04000390.7
(22) Date of filing: 10.01.2004
(51) Int. Cl.: F16K 31/62, F16K 35/02

(54) **Water-saving device for a faucet**
Wasser-Einsparungsvorrichtung für einen Hahn
Dispositif d'économie de l'eau pour un robinet

(43) Date of publication of application: 13.07.2005
(73) Proprietor: Chien, Hsin-Feng, Kaohsiung Hsien (TW); Hwang, Shuen-Shin, Taichung City (TW)
(72) Inventor: Chien, Hsin-Feng, Kaohsiung Hsien (TW); Hwang, Shuen-Shin, Taichung City (TW)
(74) Representative: Cohausz & Florack

(56) References cited:
- DE-A- 19 753 947
- US-A- 3 876 178
- US-A- 5 069 421
- US-A- 5 358 216
- US-A- 5 386 600
- US-A1- 2003 136 933

## Description

The invention relates to a water-saving device, more particularly to a water-saving device for a faucet.

Generally, running water is obtained and controlled through a faucet. However, when a user forgot to close or did not close properly the faucet, water is likely to flow continuously, and is thus wasted. As such, many kinds of water-saving faucets have been developed to overcome the aforementioned drawback. One such faucet is mounted with a push button-type stop valve. The user simply presses down the faucet to effect flow of water, which lasts for about 3 to 5 seconds. Because the flow of water is limited and short, the user usually has to repeatedly press the faucet to accomplish a task, such as washing of the hands, so that the faucet with the push button-type stop valve is relatively inconvenient and troublesome to use.

Documents US 5,386,600 and DE 197 53947 A1 disclose water-saving devices according to the prior art.

Another known water-saving faucet is mounted with a sensor, such as an infrared sensor. The user only has to put his hands in front of the faucet to effect continuous flow of the water. When the user's hands are removed from the faucet, the water stops flowing. One of the drawbacks associated with this kind of faucet is that if the sensitivity of the sensor deteriorates, it will delay flow or stop of the water, which similarly results in inconvenience during use of the faucet and wastage of the water when the flow of water cannot be timely stopped.

Therefore, the object of the present invention is to provide a water-saving device with an operation unit that can control water flowing to a faucet, and that can save water effectively.

According to this invention, a water-saving device for a faucet comprises a hose adapted to supply water to the faucet, and a control assembly connected to the hose and adapted to be located upstream of the faucet. The control assembly includes a housing, a plunger, an operation unit, and a biasing unit. The housing has an inlet port, an outlet port, a passage extending between and in fluid communication with the inlet and outlet ports, and a valve seat disposed in the passage. The plunger is mounted movably within the housing, and has a valve portion to be seated on the valve seat, and an end portion which is opposite to the valve portion and which extends outwardly of the housing. The operation unit is connected to the end portion of the plunger. The biasing unit is disposed in the housing, and biases the valve portion. The biasing unit moves the valve portion to a closing position in which the valve portion is seated against the valve seat, and the operation unit moves the valve portion to an open position in which the valve portion is moved away from the valve seat.

Other features and advantages of the present invention will become apparent in the following detailed description of the preferred embodiments with reference to the accompanying drawings, of which:
Figure 1 is a perspective view of the first preferred embodiment of a water-saving device according to the present invention when applied to a faucet on a sink;
Figure 2 is a sectional view of the first preferred embodiment, illustrating a plunger in a closing position;
Figure 3 is a view substantially similar to Figure 2, but showing the plunger when pushed by an operation unit so as to press against a biasing unit;
Figure 4 is a view substantially similar to Figure 2, but showing the plunger in an open position;
Figure 5 is a fragmentary partly sectional view of the first preferred embodiment, illustrating a latch member of a latch unit extending through a latch hole in a housing;
Figure 6 is a view substantially similar to Figure 5, but showing the latch member when moved away from the latch hole;
Figure 7 is a perspective view of a sink incorporating the second preferred embodiment of a water-saving device according to the present invention; and
Figure 8 is a sectional view of the second preferred embodiment.

Before the present invention is described in greater detail, it should be noted that like elements are denoted by the same reference numerals throughout the disclosure.

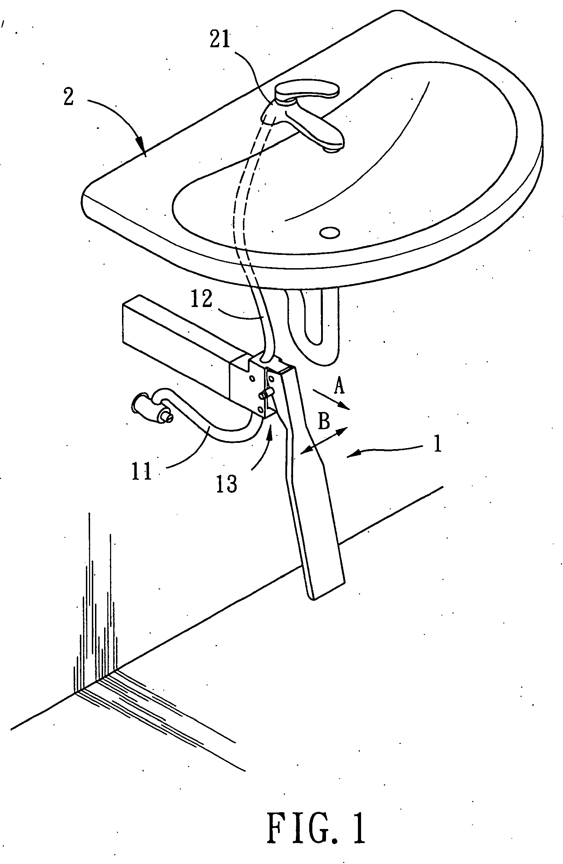

Referring to Figures 1 to 4, the first preferred embodiment of a water-saving device 1 according to the present invention is adapted to control water flow to a faucet 21 of a sink 2, and is shown to comprise an inlet hose 11 adapted to supply water to the faucet 21, an outlet hose 12 that is in fluid communication with the faucet 21, and a control assembly 13 connected to the inlet and outlet hoses 11, 12 and adapted to be located upstream of the faucet 21.

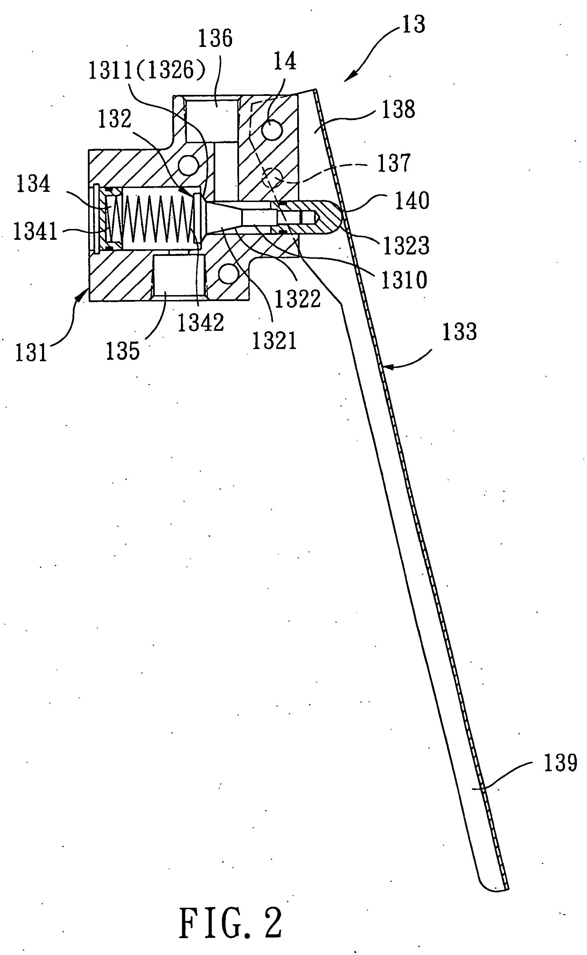

The control assembly 13, as shown in Figure 2, includes a housing 131, a plunger 132, an operation unit, and a biasing unit 134.

The housing 131 has an inlet port 135 that is in fluid communication with the inlet hose 11, an outlet port 136 that is in fluid communication with the outlet hose 12, a passage 1310 extending between and in fluid communication with the inlet and outlet ports 11, 12, and a valve seat 1311 disposed in the passage 1310.

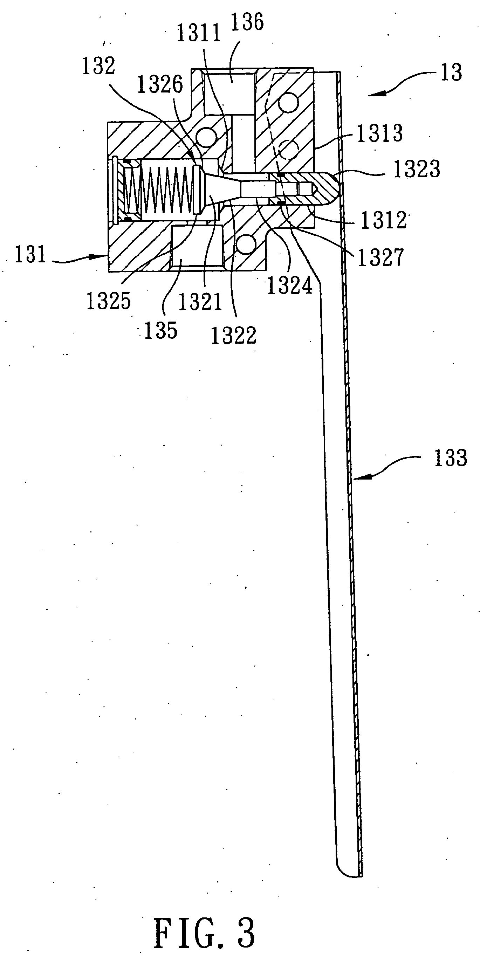

The plunger 132 is mounted movably within the housing 131, and has a valve portion 1321 to be seated on the valve seat 1311, an end portion 1323 which is opposite to the valve portion 1321 and which extends outwardly of the housing 131, and a stem portion 1324 (see Figure 3) connected between the end portion 1323 and the valve portion 1321. The valve port ion 1321 has a tapered section 1322 connected to the stem portion 1324, an enlarged section 1325 (see Figure 3) formed at one side of the tapered section 1322 opposite to the stem portion 1324, and a slanted shoulder 1326 (see Figures 2 and 3) that is connected between the tapered section 1322 and the enlarged section 1325 and that converges from the enlarged section 1325 to the tapered section 1322.

The housing 131 further has a through hole 1312 (see Figure 3) communicated with the passage 1310 to receive and permit the end portion 1323 of the plunger 132 to extend out of the housing 131, and a wall 1313 (see Figure 3) confining the through hole 1312. The end portion 1323 of the plunger 132 is in sliding contact with the wall 1313, and has a sealing ring 1327 (see Figure 3) disposed around the end portion 1323 and between the end portion 1323 and the wall 1313.

The operation unit is connected to the end portion 1323 of the plunger 132. In this embodiment, the operation unit includes a lever 133 having a pivot end portion 138 connected pivotally to the housing 131 through a pivot pin 14, a free end 139 opposite to the pivot end portion 138, and a press portion 140 between the pivot end portion 138 and the free end 139 to press the end portion 1323 of the plunger 132.

The biasing unit 134 is disposed in the housing 131, and biases the valve portion 1321 of the plunger 132. In this embodiment, the biasing unit 134 is configured as a compression spring, which has a first end 1341 fixed to the housing 131, and a second end 1342 opposite to the first end 1341 and abutting against the valve portion 1321 so as to push the valve portion 1321 against the valve seat 1311 and to push outwardly the end portion 1323 of the plunger 132.

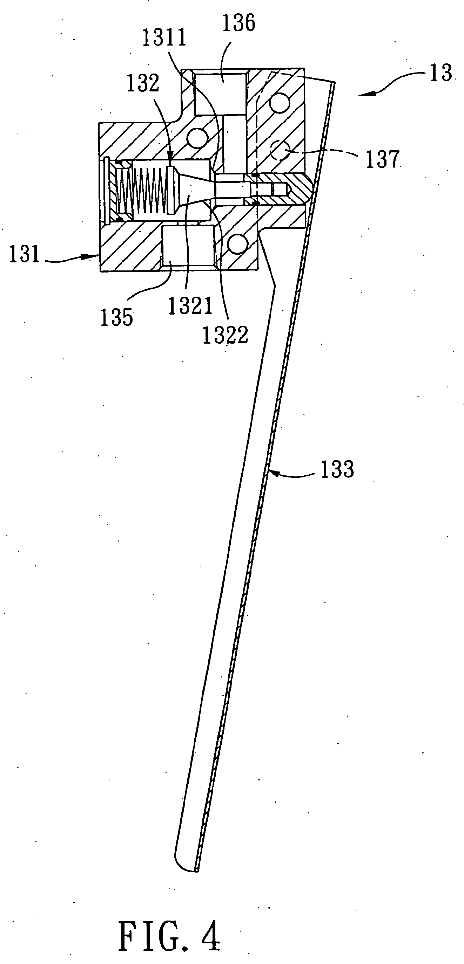

Through coordination of the lever 133 and the biasing unit 134, the plunger 132 can be moved from a closing position shown in Figure 2 to an open position shown in Figure 4. Particularly, the biasing unit 134 moves the valve portion 1321 of the plunger 132 to the closing position in which the valve portion 1321 is seated against the valve seat 1311 of the housing 131 with the slanted shoulder 1326 of the valve portion 1321 in contact with the valve seat 1311, whereas the lever 133 of the operation unit presses the end portion 1323 and moves the valve portion 1321 to the open position in which the valve portion 1321 is moved away from the valve seat 1311.

When the plunger 132 is disposed at the closing position, the inlet and outlet ports 135, 136 are not in fluid communication with each other so that water cannot pass from the inlet port 135 to the outlet port 136. When the plunger 132 is disposed at the open position, the inlet and outlet ports 135, 136 are in fluid communication with each other so that water can pass through the inlet port 135, the passage 1310, and into the outlet port 136.

Referring once again to Figures 3 and 4, when the plunger 132 moves gradually toward the open position, the space between the tapered section 1322 of the valve portion 1321 of the plunger 132 and the valve seat 1311 of the housing 131 gradually increases, so that the amount of water entering the outlet port 136 also increases, thereby gradually providing a large amount of water outflow. When the plunger 132 is located at the fully open position, the space between the tapered section 1322 of the valve portion 1321 of the plunger 132 and the valve seat 1311 of the housing 131 is at a maximum, so that the amount of water entering the outlet port 136 is the largest, thereby providing the largest amount of water outflow. Thus, the amount of water entering the outlet port 136 can be controlled by varying the space between the tapered section 1322 of the valve portion 1321 of the plunger 132 and the valve seat 1311 of the housing 131.

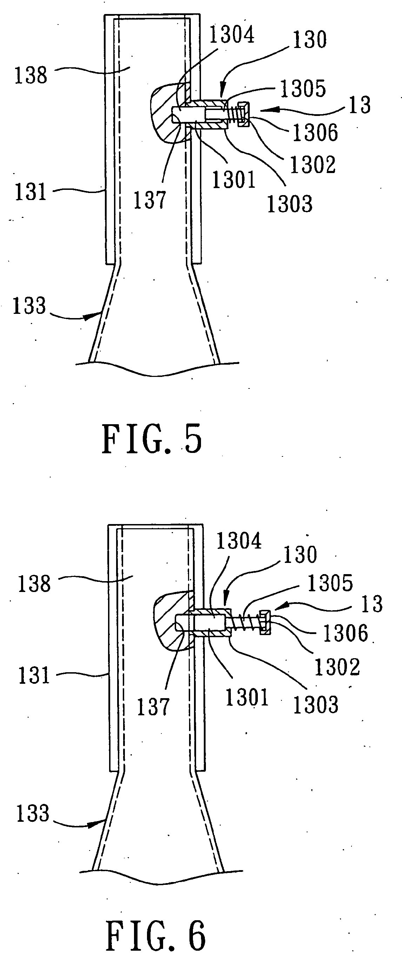

Referring to Figures 5 and 6, the control assembly 13 further includes a latch unit 130 disposed on the pivot end portion 138 of the lever 133. The housing 131 is formed with a latch hole 137 (see also Figures 2 and 4) between the end portion 1323 of the plunger 132 and the pivot end portion 138 of the lever 133 for receiving the latch unit 130. In this embodiment, the latch unit 130 includes a latch casing 1303 mounted on the lever 133, and a latch member 1301 disposed movably in the latch casing 1303. The latch member 1301 has a head portion 1304 extending into the latch hole 137, a cap 1306 opposite to the head portion 1304, a shank portion 1305 between the head portion 1304 and the cap 1306 and extending out of the latch casing 1303, and a spring member 1302 that is sleeved on the shank portion 1305 between the latch casing 1303 and the cap 1306 and that biases the cap 1306 to move away from the latch casing 1303 when the plunger 132 is moved to the closing position. When the plunger 132 is at the open position, the latch unit 130 is inserted into the latch hole 137, so that the plunger 132 is positioned thereat.

When water is desired for washing hands, the faucet 21 is opened first. Then, the user uses his knee or leg to push the free end 139 of the lever 133 toward the housing 131. The press portion 140 of the lever 133, in turn, pushes the end portion 1323 of the plunger 132 so as to move the plunger 132 to the open position shown in Figure 4. At this time, the plunger 132 compresses the biasing unit 134 so that the biasing unit 134 can store a restoring force, and the valve portion 1321 of the plunger 132 is moved away from the valve seat 1311 of the housing 131 so that the inlet and outlet ports 135, 136 can communicate fluidly with each other. Subsequently, water from the inlet hose 11 flows smoothly through the inlet port 135, the passage 1310, and the outlet port 135, 136, and flows continuously through the outlet hose 12 and out of the faucet 21.

When it is desired to stop the flow of water, the user simply releases the free end 139 of the lever 133. The biasing unit 134, at this time, releases its restoring force to push the plunger 132 to the closing position shown in Figure 2 so as to block the communication between the inlet and outlet ports 135, 136. As such, water from the inlet hose 11 cannot flow through the outlet hose 12, and the faucet 21 stops providing water. The user can tightly close the faucet 21 afterwards. Even if the faucet 21 is not tightly closed, water will not flow out of the faucet 21.

Alternatively, when it is desired to use water for a relatively long period of time, with his knee still pressing the lever 133 to place the plunger 132 at the open position, the user may push the latch member 1301 of the latch unit 130 through the cap 1306 and into the latch hole 137 in the housing 131 so as to prevent the plunger 132 from rotating. Because the force of the biasing unit 134 is applied to the lever 133 in a direction shown by an arrow (A) in Figure 1, which is substantially perpendicular to the direction of movement of the latch member 1301 shown by an arrow (B) in Figure 1, and because the biasing force of the biasing unit 134 is substantially larger than that of the spring member 1302 of the latch unit 130, the latch member 1301, which has been inserted into the latch hole 137, is pressed tightly against the wall of the latch hole 137, and is thus prevented from moving out of the latch hole 137. At this time, the user's knee can be removed from contact with the lever 133, and water flows continuously out of the faucet 21 since the plunger 132 is maintained at the open position by the lever 133.

When stoppage of water is desired, the lever 133 is slightly pressed so as to loosen the head portion 1304 from the latch hole 137. The spring member 1302 then biases the cap 1306 to move away from the latch casing 1303 bringing along the head portion 1304 so that the head portion 1304 is moved away from the latch hole 137. The lever 133 is not limited at this time so that it can be restored to its original position, and releases its pressing force against the plunger 132. The plunger 132, in turn, is biased by the biasing unit 134 to move toward the closing position, thereby stopping flow of water through the faucet 21.

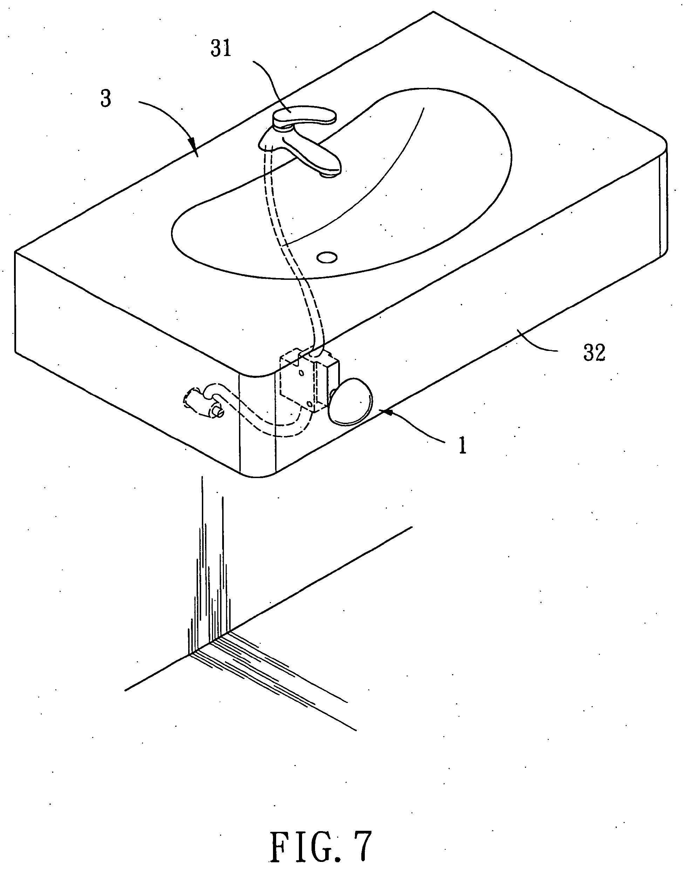

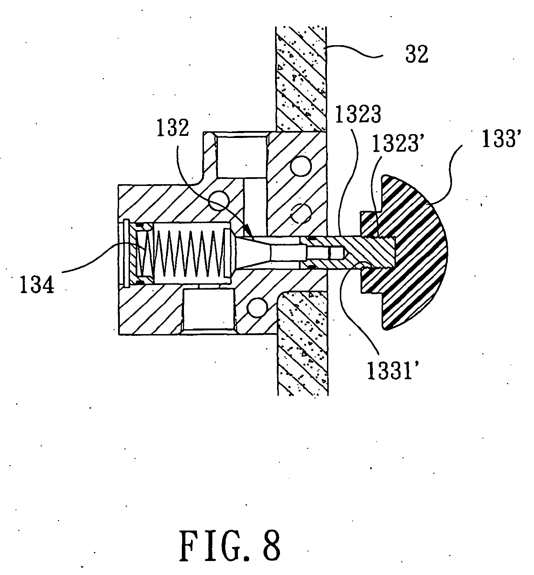

Referring to Figures 7 and 8, the second preferred embodiment of a water-saving device 1 according to the present invention is shown to be substantially similar to the first preferred embodiment, and is adapted to be installed on a sink 3. However, in this embodiment, the operation unit includes a knob 133' having an internally threaded hole 1331'. The end portion 1323 of the plunger 132 is formed with an externally threaded portion 1323' that engages the internally threaded hole 1331' so that the knob 133' is fixed threadedly on the plunger 132. The water-saving device 1 of this embodiment is directly fixed to a wall 32 of the sink 3 so that the knob 133' is located externally of the wall 32.

When the user requires water from a faucet 31, any part of the user's body can press the knob 133' so that the knob 133' can directly push the plunger 132 to the open position. When stoppage of the water is desired, the pressure on the knob 133 is simply released. Through the biasing force of the biasing unit 134, the plunger 132 is moved to the closing position, thereby stopping supply of water.

From the aforementioned description of the preferred embodiments of the present invention, it is apparent that flow of the water from the faucet 21, 31 can be controlled and stopped as desired through cooperation of the operation unit and the biasing unit 134, which can move the plunger 132 swiftly from the closing position to the open position, and vice versa. Furthermore, the duration of the water flow can be effectively controlled as well by virtue of the latch unit 130. Moreover, contact with the faucet 21, 31 is minimized because the faucet 21, 31 is opened only during use and it is not required for the user to close the same afterwards. Since contact of the user's hands with the faucet 21, 31 is reduced, the risk of transmission of infectious diseases is also reduced such that the present invention is safe and convenient to use.

## Claims

1. A water-saving device (1) for a faucet (21), comprising:
a hose (11) adapted to supply water to the faucet (21); and
a control assembly (13) connected to said hose (11) and adapted to be located upstream of the faucet (21), said control assembly (13) including:
a housing (131) having an inlet port (135), an outlet port (136), a passage (1310) extending between and in fluid communication with said inlet and outlet ports (135, 136), and a valve seat (1311) disposed in said passage (1310),
a plunger (132) mounted movably within said housing (131), and having a valve portion (1321) to be seated on said valve seat (1311), and an end portion (1323) which is opposite to said valve portion (1321) and which extends outwardly of said housing (131),
an operation unit connected to said end portion (1323) of said plunger (132), and
a biasing unit (134) disposed in said housing (131) and biasing said valve portion (1321),
wherein said biasing unit (134) moves said valve portion (1321) to a closing position in which said valve portion (1321) is seated against said valve seat (1311), and said operation unit moves said valve portion (1321) to an open position in which said valve portion (1321) is moved away from said valve seat (1311),
said water-saving device being **characterized by**:
said plunger (132) having a stem portion (1324) connected between said end portion (1323) and said valve portion (1321), said valve portion (1321) having a tapered section (1322) connected to said stem portion (1324), an enlarged section (1325) formed at one side of said tapered section (1322) opposite to said stem portion (1324), and a slanted shoulder (1326) connected between said tapered section (1322) and said enlarged section (1325) and converging from said enlarged section (1325) to said tapered section (1322), said slanted shoulder (1326) being in contact with said valve seat (1311) when said valve portion (1321) is in said closing position.

2. The water-saving device (1) as claimed in Claim 1, **characterized in that** said biasing unit (134) is configured as a compression spring which has a first end (1341) fixed to said housing (131) and a second end (1342) abutting against said valve portion (1321) so as to push said valve portion (1321) against said valve seat (1311) and to push outwardly said end portion (1323) of said plunger (132).

3. The water-saving device (1) as claimed in Claim 2, **characterized in that** said housing (131) has a through hole (1312) communicated with said passage (1310) to receive and permit said end portion (1323) of said plunger (132) to extend out of said housing (131), and a wall (1313) confining said through hole (1312), said end portion (1323) being in sliding contact with said wall (1313) and having a sealing ring (1327) which is disposed around said end portion (1323) and between said end portion (1323) and said wall (1313).

4. The water-saving device (1) as claimed in Claim 3, **characterized in that** said operation unit includes a lever (133) having a pivot end portion (138) connected pivotally to said housing (131), a free end (139) opposite to said pivot end portion (138), and a press portion (140) disposed between said free end (139) and said pivot end portion (138) to press said end portion (1323) of said plunger (132).

5. The water-saving device (1) as claimed in Claim 4, further **characterized in that** said housing (131) is formed with a latch hole (137) between said end portion (1323) of said plunger (132) and said pivot end portion (138) of said lever (133), said control assembly (13) further including a latch unit (130) disposed on said pivot end portion (138), said latch unit (130) extending into said latch hole (137) when said plunger (132) is disposed at said open position so as to position said plunger (132) thereat.

6. The water-saving device (1) as claimed in Claim 5, **characterized in that** said latch unit (130) includes a latch casing (1303) mounted on said lever (133), and a latch member (1301) disposed movably in said latch casing (1303), said latch member (1301) having a head portion (1304) extending into said latch hole (137), a cap (1306) opposite to said head portion (1304), a shank portion (1305) between said head portion (1304) and said cap (1306) and extending out of said latch casing (1303), and a spring member (1302) sleeved on said shank portion (1305) between said latch casing (1303) and said cap (1306) and biasing said cap (1306) to move away from said latch casing (1303).

7. The water-saving device (1) as claimed in Claim 1, **characterized in that** said operation unit is a knob (133') having an internally threaded hole (1331'), said end portion (1323) of said plunger (132) being formed with an externally threaded portion (1323') that engages said internally threaded hole (1331').

## Patentansprüche

1. Wassersparvorrichtung (1) für einen Wasserhahn (21), enthaltend:
einen Schlauch (11), der dafür ausgelegt ist, den Wasserhahn (21) mit Wasser zu versorgen; und
eine Steueranordnung (13), die mit dem Schlauch (11) verbunden ist und dafür ausgelegt ist, dass sie stromaufwärts des Wasserhahns (21) angeordnet wird, welche Steueranordnung (13) umfasst:
ein Gehäuse (131) mit einer Einlassöffnung (135), einer Auslassöffnung (136), einem zwischen der Einlassöffnung und der Auslassöffnung (135, 136) in Fluidverbindung verlaufenden Kanal (1310) und einem in dem Kanal (1310) angeordneten Ventilsitz (1311),
einen in dem Gehäuse (131) beweglich montierten Stößel (132), der einen Ventilabschnitt (1321), der auf dem Ventilsitz (1311) aufzusetzen ist, und einen Endabschnitt (1323) hat, der dem Ventilabschnitt (1321) gegenüberliegt und der nach außerhalb des Gehäuses (131) verläuft,
eine Betätigungseinheit, die mit dem Endabschnitt (1323) des Stößels (133) verbunden ist, und
eine Vorspanneinheit (134), die in dem Gehäuse (131) angeordnet ist und den Ventilabschnitt (1321) vorspannt, wobei die Vorspanneinheit (134) den Ventilabschnitt (1321) in eine geschlossene Position bewegt, in der der Ventilabschnitt (1321) in dem Ventilsitz (1311) sitzt, und der Betätigungsabschnitt den Ventilabschnitt (1321) in eine offene Position bewegt, in der der Ventilabschnitt (1321) von dem Ventilsitz (1311) wegbewegt ist,
welche Wassersparvorrichtung **gekennzeichnet ist durch**:
den Stößel (132), der einen Schaftabschnitt (1324) hat, der zwischen dem Endabschnitt (1323) und dem Ventilabschnitt (1321) angebracht ist, welcher Ventilabschnitt (1321) einen kegelförmigen Abschnitt (1322) hat, der mit dem Schaftabschnitt (1324) verbunden ist, einen erweiterten Abschnitt (1325), der an einer Seite des kegelförmigen Abschnitts (1322) gebildet ist, die dem Schaftabschnitt (1324) entgegengesetzt ist, und eine schräg verlaufende Schulter (1326), die zwischen dem kegelförmigen Abschnitt (1322) und dem erweiterten Abschnitt (1325) angebracht ist und von dem erweiterten Abschnitt (1325) zu dem kegelförmigen Abschnitt (1322) konvergiert, welche schräg verlaufende Schulter (1326) in Kontakt mit dem Ventilsitz (1311) ist, wenn der Ventilabschnitt (1321) in der geschlossenen Position ist.

2. Wassersparvorrichtung (1) nach Anspruch 1, **dadurch gekennzeichnet, dass** die Vorspanneinheit (134) als eine Druckfeder konfiguriert ist, die ein erstes Ende (1341) hat, das an dem Gehäuse (131) befestigt ist, und ein zweites Ende (1342), das an dem Ventilabschnitt (1321) anliegt, um so den Ventilabschnitt (1321) gegen den Ventilsitz (1311) zu drücken und den Endabschnitt (1323) des Stößels (132) nach außen zu drücken.

3. Wassersparvorrichtung (1) nach Anspruch 2, **dadurch gekennzeichnet, dass** das Gehäuse (131) eine Durchgangsöffnung (1312) hat, die mit dem Kanal (1310) in Verbindung steht, um den Endabschnitt (1323) des Stößels (132) aufzunehmen und dessen Verlauf nach außerhalb des Gehäuses (131) zu ermöglichen, und eine die Durchgangsöffnung (1312) begrenzende Wand (1313), wobei der Endabschnitt (1323) in Gleitkontakt mit der Wand (1313) steht und einen Dichtring (1327) hat, der um den Endabschnitt (1323) und zwischen dem Endabschnitt (1323) und der Wand (1313) angeordnet ist.

4. Wassersparvorrichtung (1) nach Anspruch 3, **dadurch gekennzeichnet, dass** die Betätigungseinheit einen Hebel (133), der einen Gelenksendabschnitt (138) hat, der gelenkig mit dem Gehäuse (131) verbunden ist, ein dem Gelenksendabschnitt (138) entgegengesetztes freies Ende (139) und einen Drückerabschnitt (140) umfasst, der zwischen dem freien Ende (139) und dem Gelenksendabschnitt (138) angeordnet ist, um den Endabschnitt (1323) des Stößels (132) zu drücken.

5. Wassersparvorrichtung (1) nach Anspruch 4, ferner **dadurch gekennzeichnet, dass** das Gehäuse (131) mit einer Verriegelungsöffnung (137) zwischen dem Endabschnitt (1323) des Stößels (132) und dem Gelenksendabschnitt (138) des Hebels (133) gebildet ist, wobei die Steueranordnung (13) ferner eine Verriegelungseinheit (130) enthält, die an dem Gelenksendabschnitt (138) angeordnet ist, welche Verriegelungseinheit (130) sich in die Verriegelungsöffnung (137) erstreckt, wenn der Stößel (132) in der offenen Position angeordnet ist, um so den Stößel (132) dortselbst zu positionieren.

6. Wassersparvorrichtung (1) nach Anspruch 5, **dadurch gekennzeichnet, dass** die Verriegelungseinheit (130) ein an dem Hebel (133) montiertes Verriegelungsgehäuse (1303) umfasst sowie ein in dem Verriegelungsgehäuse (1303) beweglich angeordnetes Verriegelungselement (1301), welches Verriegelungselement (1301) einen Kopfabschnitt (1304) hat, der sich in die Verriegelungsöffnung (137) erstreckt, eine dem Kopfabschnitt (1304) entgegengesetzte Kappe (1306), einen Schaftabschnitt (1305) zwischen dem Kopfabschnitt (1304) und der Kappe (1306) und der aus dem Verriegelungsgehäuse (1303) heraus verläuft, sowie ein Federelement (1302), das auf den Schaftabschnitt (1305) zwischen dem Verriegelungsgehäuse (1303) und der Kappe (1306) aufgeschoben ist und die Kappe (1306) so vorspannt, dass sie sich von dem Verriegelungsgehäuse (1303) wegbewegt.

7. Wassersparvorrichtung (1) nach Anspruch 1, **dadurch gekennzeichnet, dass** die Betätigungseinheit ein Knopf (133') ist, der eine Innengewindebohrung (1331') hat, wobei der Endabschnitt (1323) des Stößels (132) mit einem Außengewindeabschnitt (1323') gebildet ist, der mit der Innengewindebohrung (1331') in Eingriff kommt.

## Revendications

1. Un dispositif économiseur d'eau (1) pour un robinet de puisage (21), comprenant :
un tuyau (11) adapté pour alimenter en eau le robinet de puisage (21) ; et
un assemblage de commande (13) connecté sur ledit tuyau (11) et adapté pour être placé en amont du robinet de puisage (21), ledit assemblage de commande (13) incluant:
un boîtier (131) ayant un orifice d'alimentation (135), un orifice de décharge (136), un passage (1310) ménagé en libre communication entre lesdits orifices d'alimentation et de décharge (135, 136), et un siège de clapet (1311) disposé dans ledit passage (1310),
un piston plongeur (132) monté de manière mobile dans ledit boîtier (131), et ayant une section clapet (1321) s'adaptant sur ledit siège de clapet (1311), et une section d'extrémité (1323) qui se trouve à l'opposé de ladite section clapet (1321) et qui se prolonge à l'extérieur dudit boîtier (131),
une unité d'opération connectée sur ladite section d'extrémité (1323) dudit piston plongeur (132), et
une unité de déviation (134) disposée dans ledit boîtier (131) et faisant dévier ladite section clapet (1321),
en cela que ladite unité de déviation (134) déplace ladite section clapet (1321) vers une position de fermeture dans laquelle ladite section clapet (1321) est appuyée contre ledit siège de clapet (1311), et ladite unité d'opération déplace ladite section clapet (1321) vers une position d'ouverture dans laquelle ladite section clapet (1321) est écartée dudit siège de clapet (1311),
ledit dispositif économiseur d'eau étant **caractérisé par**:
ledit piston plongeur (132) ayant une section tige (1324) connectée entre ladite section d'extrémité (1323) et ladite section clapet (1321), ladite section clapet (1321) ayant une section tronconique (1322) connectée à ladite section tige (1324), une section allongée (1325) formée à l'un des côté de ladite section tronconique (1322) à l'opposé de ladite section tige (1324), et un épaulement en oblique (1326) connecté entre ladite section tronconique (1322) et ladite section allongée (1325) et convergeant depuis ladite section allongée (1325) vers ladite section tronconique (1322), ledit épaulement en oblique (1326) étant en contact avec ledit siège de clapet (1311) lorsque ladite section clapet (1321) est en position fermée.

2. Le dispositif économiseur d'eau (1) selon la revendication 1, **caractérisé en ce que** ladite unité de déviation (134) est configurée sous la forme d'un ressort de compression avec une première extrémité (1341) fixée avec ledit boîtier (131) et une seconde extrémité (1342) buttant contre ladite section clapet (1321) de manière à pousser ladite section clapet (1321) contre ledit siège de clapet (1311) et de pousser vers l'extérieur ladite section d'extrémité (1323) dudit piston plongeur (132).

3. Le dispositif économiseur d'eau (1) selon la revendication 2, **caractérisé en ce que** ledit boîtier (131) intègre un trou traversant (1312) communiquant avec ledit passage (1310) pour recevoir et permettre à ladite section d'extrémité (1323) dudit piston plongeur (132) de se prolonger hors dudit boîtier (131), et une paroi (1313) confinant ledit trou traversant (1312), ladite section d'extrémité (1323) étant en contact coulissant avec ladite paroi (1313) et ayant une bague d'étanchéité (1327) disposée autour de ladite section d'extrémité (1323) et entre ladite section d'extrémité (1323) et ladite paroi (1313).

4. Le dispositif économiseur d'eau (1) selon la revendication 3, **caractérisé en ce que** ladite unité d'opération inclut un levier (133) ayant une section d'extrémité pivot (138) connectée de manière à pivoter par rapport avec ledit boîtier (131), une extrémité libre (139) opposée à ladite section d'extrémité pivot (138), et une section de pression (140) disposée entre ladite extrémité libre (139) et ladite section d'extrémité pivot (138) pour presser ladite section d'extrémité (1323) dudit piston plongeur (132).

5. Le dispositif économiseur d'eau (1) selon la revendication 4, **caractérisé en ce que** ledit boîtier (131) est formé avec un trou de gâche (137) entre ladite section d'extrémité (1323) dudit piston plongeur (132) et ladite section d'extrémité pivot (138) dudit levier (133), ledit assemblage de commande (13) incluant en outre une unité de gâche (130) disposée sur ladite section d'extrémité pivot (138), ladite unité de gâche (130) se prolongeant dans ledit trou de gâche (137) lorsque ledit piston plongeur (132) est disposé à ladite position d'ouverture de manière à positionner ledit piston plongeur (132) à cet endroit.

6. Le dispositif économiseur d'eau (1) selon la revendication 5, **caractérisé en ce que** ladite unité de gâche (130) inclut un logement de pêne (1303) monté sur ledit levier (133), et un élément pêne (1301) disposé de manière mobile dans ledit logement de pêne (1303), ledit élément pêne (1301) ayant une section tête (1304) se prolongeant dans ledit trou de gâche (137), un capuchon (1306) à l'opposé de ladite section tête (1304), une section tige (1305) entre ladite section tête (1304) et ledit capuchon (1306) et se prolongeant hors dudit logement de pêne (1303), et un élément ressort (1302) emmanché sur ladite section tige (1305) entre ledit logement de pêne (1303) et ledit capuchon (1306) et faisant dévier ledit capuchon (1306) pour qu'il s'écarte dudit logement de pêne (1303).

7. Le dispositif économiseur d'eau (1) selon la revendication 1, **caractérisé en ce que** ladite unité d'opération est un bouton (133') ayant un trou à filetage intérieur (1331'), ladite section d'extrémité (1323) dudit piston plongeur (132) étant formé avec une section à filetage extérieur (1323') qui s'engage dans le trou à filetage intérieur (1331').
